# EUROPÄISCHE PATENTANMELDUNG

(11) **EP 1 467 095 A2**
(43) Veröffentlichungstag der Anmeldung: **13.10.2004**
(21) Anmeldenummer: 04007901.4
(22) Anmeldetag: 01.04.2004
(51) Int. Cl.: F03D 11/00, F03D 7/02

(54) **Lager für eine Windenenergieanlage**

(30) Priorität: 07.04.2003 DE 10316004
(71) Anmelder: AB SKF, S-415 50 Göteborg (SE)
(72) Erfinder: Kottwitz, Bernd, 66346 Püttlingen (DE); Löser, Norbert, 66346 Püttlingen (DE); Liesegang, Hans-Jürgen, 26419 Schortens (DE)
(74) Vertreter: Gosdin, Michael, Dr.

(57) **Zusammenfassung**

Die Erfindung betrifft ein Lager (1) für eine Windenergieanlage, das einen ersten Lagerring (2) und einen zweiten Lagerring (3) aufweist, die gegeneinander verdrehbar sind. Das erfindungsgemäße Lager (1) zeichnet sich dadurch aus, dass am ersten Lagerring (2) über seinen Umfang verteilt mehrere Triebstockelemente (14) befestigt sind, die über Funktionsflächen (17, 19) für einen formschlüssigen Eingriff eines Maschinenelements verfügen und die Triebstockelemente (14) wenigstens im Bereich ihrer Funktionsflächen (17, 19) relativ zum ersten Lagerring (2) drehbar sind.

## Beschreibung

Die Erfindung betrifft ein Lager für eine Windenergieanlage.

Eine Windenergieanlage weist in der Regel mehrere Lager auf, die zum Teil extrem große Abmessungen besitzen. Insbesondere sind Lager zur drehbeweglichen Anordnung eines Maschinenhauses, eines Rotors und von Rotorblättern vorgesehen.

Lager für Windenergieanlagen sind bereits in vielfältigen Ausführungsformen bekannt. So ist beispielsweise aus der DE 100 12 773 A1 eine Drehverbindung für die Maschinenhauslagerung einer Windenergieanlage bekannt, die als Wälzlager oder Gleitlager ausgeführt ist. Die Drehverbindung weist eine Verzahnung auf, in die ein Ritzel eines Drehantriebs eingreift. Weiterhin ist in die Drehverbindung eine Bremseinrichtung integriert mit einem Bremsorgan, das reibschlüssig gegen wenigstens eines der Drehverbindungsteile pressbar ist.

Da die Lager einer Windenergieanlage zum Teil extrem große Abmessungen aufweisen, entsteht ein erheblicher Aufwand, wenn ein Lager beispielsweise wegen einer Beschädigung der Verzahnung ausgetauscht werden muß.

Der Erfindung liegt daher die Aufgabe zugrunde, eine möglichst lange Betriebsdauer einer Windenergieanlage ohne Lageraustausch zu ermöglichen.

Diese Aufgabe wird durch ein Lager mit der Merkmalskombination des Anspruchs 1 gelöst.

Das erfindungsgemäße Lager für eine Windenergieanlage weist einen ersten Lagerring und einen zweiten Lagerring auf, die gegeneinander verdrehbar sind. Die Besonderheit des erfindungsgemäßen Lagers besteht darin, dass am ersten Lagerring über seinen Umfang verteilt mehrere Triebstockelemente befestigt sind, die über Funktionsflächen für einen formschlüssigen Eingriff eines Maschinenelements verfügen, und die Triebstockelemente jeweils wenigstens im Bereich ihrer Funktionsflächen relativ zum ersten Lagerring drehbar sind.

Die Erfindung hat den Vorteil, dass selbst bei einem Verschleiß oder einer Beschädigung von Triebstockelementen ein Austausch des Lagers nicht erforderlich ist, da die Triebstockelemente einzeln vor Ort ausgewechselt werden können. Dadurch lässt sich eine deutliche Reduzierung der Wartungskosten erreichen. Ein weiterer Vorteil besteht darin, dass durch die Drehbarkeit der Funktionsflächen ein spielfreier Eingriff des Maschinenelements oder sogar eine Vorspannung des Maschinenelements gegenüber den Triebstockelementen möglich ist, ohne dass ein unzulässig hoher Verschleiß auftritt. Dadurch ist eine sehr präzise Positionierung des ersten Lagerrings und der damit verbundenen Komponenten möglich.

Bei einem Ausführungsbeispiel der Erfindung sind die Triebstockelemente im Bereich wenigstens eines ihrer axialen Enden am ersten Lagerring befestigt. Vorzugsweise weist der Lagerring zur Aufnahme der Triebstockelemente dabei wenigstens bereichsweise einen U-förmigen Querschnitt auf. Auf diese Weise lassen sich die Triebstockelemente zum einen sehr präzise und stabil am ersten Lagerring befestigen. Zum anderen kann das Maschinenelement, das formschlüssig in die Triebstockelemente eingreift, sehr einfach ausgebildet werden, beispielsweise in Form eines herkömmlichen Ritzels mit an die Form der Funktionsflächen angepasster Verzahnung.

Bei einem weiteren Ausführungsbeispiel sind die Triebstockelemente im Bereich ihrer axialen Mitte am ersten Lagerring befestigt. Dies hat den Vorteil, dass keine besonderen Anforderungen an die Formgebung des ersten Lagerrings bestehen und eine Befestigung mit relativ einfachen Mitteln möglich ist.

Die Triebstockelemente können am ersten Lagerring drehbar aufgehängt sein, so dass jeweils die gesamten Triebstockelemente relativ zum ersten Lagerring verdrehbar sind. Dabei ist es vorteilhaft, wenn die Triebstockelemente mittels jeweils wenigstens einer Gleitbuchse relativ zum ersten Lagerring drehbar gelagert sind. Ein Vorteil dieser Variante der Erfindung besteht darin, dass die Triebstockelemente sehr einfach und ohne beweglichen Komponenten ausgebildet werden können.

Ebenso ist es auch möglich, dass die Triebstockelemente am ersten Lagerring verdrehgesichert befestigt sind und jeweils wenigstens eine drehbare Komponente aufweisen, an der die Funktionsfläche für den formschlüssigen Eingriff des Maschinenelements ausgebildet ist. Bei dieser Variante ist es vorteilhaft, dass die Befestigung der Triebstockelemente am ersten Lagerring mit einem sehr geringen Aufwand möglich ist. Insbesondere dann, wenn die drehbaren Komponenten als Hülsen ausgebildet sind, ist zudem die an der Drehbewegung beteiligte Masse der Triebstockelemente sehr gering.

Die Details der Ausbildung der Triebstockelemente können jeweils an die Gegebenheiten des Anwendungsfalles angepasst werden. Häufig ist es dabei möglich, die Triebstockelemente in sehr einfacher Weise als Bolzen auszubilden.

Die Erfindung wird nachstehend an Hand der in den Figuren dargestellten Ausführungsbeispiele erläutert.

Es zeigen:
- Figur 1: ein erstes Ausführungsbeispiel des erfindungsgemäßen Lagers, bei dem die Triebstockbolzen drehbar am Außenring befestigt sind, in Schnittdarstellung,
- Figur 2: ein zweites Ausführungsbeispiel mit drehbaren Triebstockbolzen in Schnittdarstellung,
- Figur 3: ein drittes Ausführungsbeispiel, bei dem die Triebstockbolzen jeweils eine drehbare Hülse aufweisen, in Schnittdarstellung und
- Figur 4: ein viertes Ausführungsbeispiel, bei dem die Triebstockbolzen jeweils zwei drehbare Hülsen aufweisen, in Schnittdarstellung.

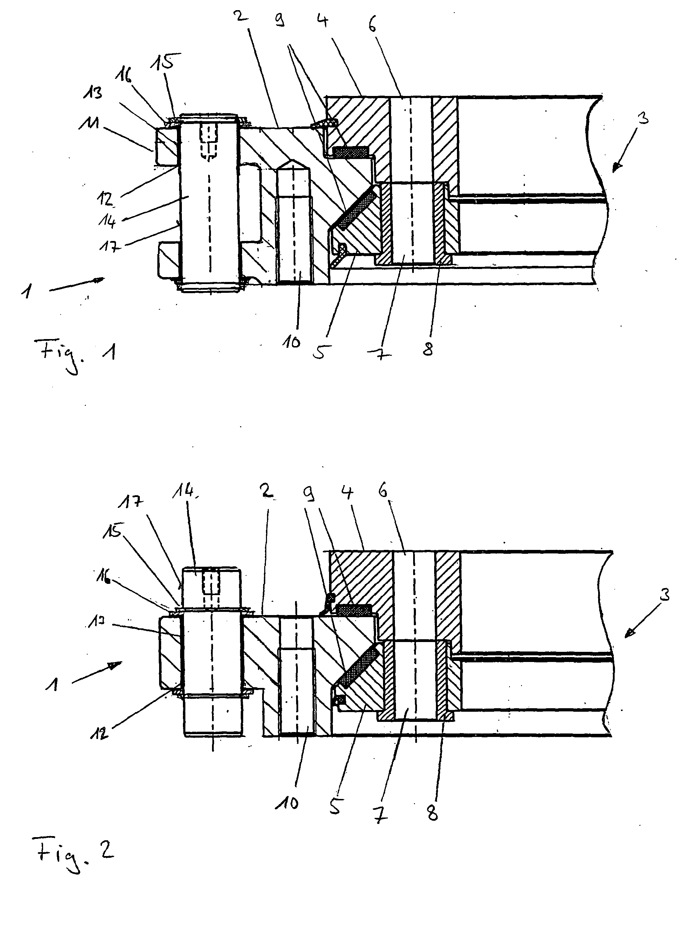

Figur 1 zeigt ein erstes Ausführungsbeispiel für ein Lager 1 gemäß der Erfindung in Schnittdarstellung. Das Lager 1 weist einen Außenring 2 und einen Innenring 3 auf. Der Innenring 3 besteht aus einem ersten Ringteil 4 und einem zweiten Ringteil 5, die axial benachbart zueinander angeordnet sind. Das erste Ringteil 4 verfügt über einen Satz von über seinen Umfang verteilten ersten Axialbohrungen 6, die mit zweiten Axialbohrungen 7 des zweiten Ringteils 5 fluchten. In die zweiten Axialbohrungen 7 des zweiten Ringteils 5 sind Justagehülsen 8 für die Spieleinstellung des Lagers 1 eingesetzt. Zwischen dem ersten Ringteil 4 des Innenrings 3 und dem Außenring 2 sowie dem zweiten Ringteil 5 des Innenrings 3 und dem Außenring 2 sind je ein Satz von Gleitbelägen 9 angeordnet, so dass es sich bei dem Lager 1 um ein Gleitlager handelt. Der Außenring 2 verfügt über einen Satz von axialen Gewindebohrungen 10 zur Aufnahme von figürlich nicht dargestellten Befestigungsschrauben und weist in seinem radial äußeren Bereich einen U-förmigen Querschnitt auf, der durch zwei axial zueinander beabstandete Flansche 11 gebildet wird, die integrale Bestandteile des Außenrings 2 sind. Die Flansche 11 weisen je einen Satz miteinander fluchtender axialer Aufnahmebohrungen 12 auf, die gleichmäßig über den Umfang verteilt sind und Gleitbuchsen 13 aufnehmen. In je zwei miteinander fluchtende Gleitbuchsen 13 ist ein Triebstockbolzen 14 eingesetzt und durch zwei Federringe 15, die in dafür vorgesehene Radialnuten der Triebstockbolzen 14 eingreifen, gegen axiales Verschieben gesichert. Die Federringe 15 stützen sich axial auf Unterlegscheiben 16 ab, die jeweils an einem abgewinkelten Abschnitt der Gleitbuchsen 13 axial anliegen.

Mit der vorstehend beschriebenen Anordnung wird erreicht, dass die Triebstockbolzen 14 jeweils drehbar und axial fixiert in dem relativ zum Innenring 3 drehbaren Außenring 2 gelagert sind. Im axialen Zwischenraum zwischen den beiden Flanschen 11 des Außenrings 2 kann ein figürlich nicht dargestelltes Maschinenelement, wie beispielsweise ein Ritzel eines Antriebsmotors, formschlüssig in die Triebstockbolzen 14 eingreifen. Auf diese Weise kann der Außenring 2 relativ zum Innenring 3 verdreht werden bzw. in einer definierten Drehposition fixiert werden. Bei dem in Figur 1 dargestellten ersten Ausführungsbeispiel ist ein berührender Kontakt zwischen dem eingreifenden Maschinenelement und den äußeren Mantelflächen 17 der Triebstockbolzen 14 vorgesehen.

Ein wichtiger Aspekt der Erfindung besteht dabei darin, dass die äußeren Mantelflächen 17 der Triebstockbolzen 14 jeweils relativ zum Außenring 2 verdrehbar sind. Durch die Verdrehbarkeit wird erreicht, dass sich die Mantelflächen 17 jeweils mit dem eingreifenden Maschinenelement mitbewegen und es somit kaum zu einem verschleißverursachenden Gleiten des eingreifenden Maschinenelements auf den Mantelflächen 17 kommt. Dadurch ist es möglich, den Eingriff des Maschinenelements in die Triebstockbolzen 14 spielfrei oder sogar mit einer Vorbespannung zu gestalten und somit eine sehr gute Positioniergenauigkeit des Außenrings 2 mittels des eingreifenden Maschinenelements zu erzielen. Die Verdrehbarkeit der Mantelflächen 17 wird dadurch ermöglicht, dass die Triebstockbolzen 14 jeweils insgesamt gegenüber dem Außenring 2 verdreht werden können. Hierzu sind die Triebstockbolzen 14 mittels der Gleitbuchsen 13 drehbar gelagert.

Figur 2 zeigt ein zweites Ausführungsbeispiel des Lagers 1 in Schnittdarstellung. Das zweite Ausführungsbeispiel unterscheidet sich vom ersten Ausführungsbeispiel im wesentlichen dadurch, dass die Triebstockbolzen 14 jeweils nicht im Bereich ihrer axialen Enden, sondern im Bereich ihrer Mitte am Außenring 2 fixiert sind. Entsprechend weist der Außenring 2 beim zweiten Ausführungsbeispiel keinen U-förmigen Querschnitt auf, sondern ist in seinem äußeren Radialbereich axial durchgehend ausgebildet. Außerdem weist der Außenring 2 bei dem zweiten Ausführungsbeispiel lediglich einen Satz Aufnahmebohrungen 12 auf, die jeweils eine Gleitbuchse 13 aufnehmen. Die Triebstockbolzen 14 sind axial mittig in den Gleitbuchsen 13 angeordnet und zu beiden axialen Seiten hin durch die Federringe 15 und die Unterlegscheiben 16 gesichert. Beim zweiten Ausführungsbeispiel des Lagers können die Triebstockbolzen 14 beispielsweise mit einem Antriebsritzel zusammen wirken, dessen Verzahnung im Querschnitt U-förmig ausgebildet ist.

Figur 3 zeigt ein drittes Ausführungsbeispiel des Lagers 1. Dieses Ausführungsbeispiel zeichnet sich dadurch aus, dass die Triebstockbolzen 14 drehfest im Außenring 2 angeordnet sind, wobei der Außenring 2 analog zum ersten Ausführungsbeispiel einen U-förmigen Querschnitt aufweist. Die Triebstockbolzen 14 können beispielsweise mit einer Überdeckung in die Aufnahmebohrungen 12 des Außenrings 2 eingepresst und dadurch sowohl in Umfangsrichtung als auch in Axialrichtung fixiert sein. Im axialen Zwischenraum zwischen den beiden Flanschen 11 trägt jeder Triebstockbolzen 14 eine Gleitbuchse 13, die beispielsweise aufgepresst sein kann. Die Gleitbuchse 13 trägt wiederum eine Hülse 18, die drehbar auf der Gleitbuchse 13 angeordnet ist. Dabei sind die axialen Endbereiche der Gleitbuchse 13 radial nach außen gezogen und dienen der Hülse 18 als axiale Anlaufflächen. Beim dritten Ausführungsbeispiel ist vorgesehen, dass es beim Eingriff des Maschinenelements jeweils zu einer Berührung mit einer äußeren Mantelfläche 19 der Hülse 18 kommt, die über die Gleitbuchse 13 relativ zum Außenring 2 drehbar gelagert ist, so dass sich entsprechende Effekte einstellen, wie bereits anhand des in der Figur 1 dargestellten ersten Ausführungsbeispiels beschrieben.

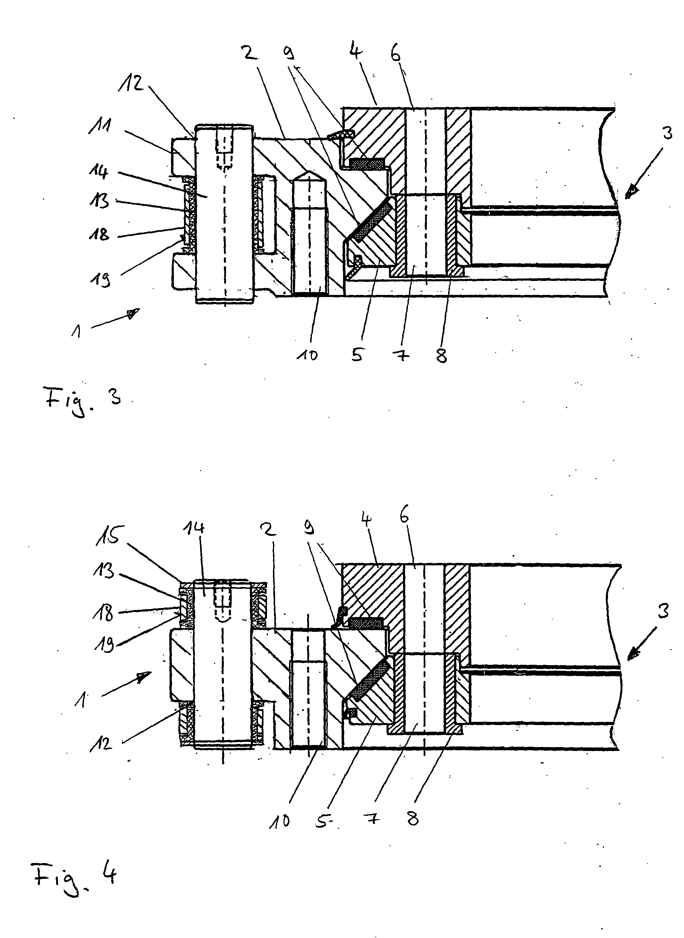

Figur 4 zeigt ein viertes Ausführungsbeispiel des Lagers 1 in Schnittdarstellung. Bei diesem Ausführungsbeispiel sind die Triebstockbolzen 14 wiederum drehfest am Außenring 2 fixiert, wobei die Form des Außenrings 2 entsprechend dem zweiten Ausführungsbeispiel gewählt ist. Folglich sind die Triebstockbolzen 14 jeweils im Bereich ihrer axialen Mitte am Außenring 2 fixiert. Über die freien Enden der Triebstockbolzen 14 sind jeweils die Gleitbuchsen 13 gestülpt, die in Axialrichtung durch die Federringe 15 fixiert sind und je eine Hülse 18 aufnehmen. Die Hülsen 18 sind analog zum dritten Ausführungsbeispiel durch die Gleitbuchsen 13 drehbar zum Außenring 2 gelagert und dienen dem Maschinenelement als Angriffsfläche. Folglich könnte beispielsweise ein Antriebsritzel zum Antrieb des Außenrings 2 entsprechend dem zweiten Ausführungsbeispiel einen U-förmigen Querschnitt aufweisen.

Die vorstehend beschriebenen Ausführungsbeispiele beziehen sich jeweils auf eine Ausbildung des Lagers 1 als Gleitlager. Ebenso ist es jeweils auch möglich, das Lager 1 als Wälzlager auszubilden, so dass sich die Erfindung sowohl auf Gleitlager als auch auf Wälzlager bezieht. Weiterhin ist es auch möglich, die Triebstockbolzen 14 nicht am Außenring 2, sondern am Innenring 3 zu befestigen. Der Außenring 2, der Innenring 3 und die Triebstockbolzen 14 sind dabei in der Regel aus Stahl gefertigt, wobei prinzipiell auch andere Werkstoffe möglich sind, falls die Anwendung dies zulässt.

Vorzugsweise wird das Lager 1 zur Lagerung der Rotorblätter einer Windenergieanlage eingesetzt und ermöglicht ein Verdrehen der Rotorblätter jeweils um ihre Längsachse, d. h. pro Rotorblatt ist jeweils wenigstens ein Lager 1 vorgesehen. Durch das Verdrehen der Rotorblätter kann der Anstellwinkel zum Wind verändert werden, wobei in der Regel eine hohe Präzision für den eingestellten Anstellwinkel einzuhalten ist. Weiterhin eignet sich das Lager 1 auch als Turmlager, das das Maschinenhaus der Windenergieanlage relativ zum Turm drehbar lagert. Die Dimensionierung und auch die konstruktiven Details unterscheiden sich bei dieser Anwendung zwar erheblich von der Blattlagerung, der Erfindungsgedanke bezüglich der drehbaren Lagerung der Triebstockbolzen 14 bzw. der Hülsen 18 wird allerdings auch bei dieser Anwendung entsprechend umgesetzt.

### Bezugszeichen

- 1: Lager
- 2: Außenring
- 3: Innenring
- 4: erstes Ringteil
- 5: zweites Ringteil
- 6: erste Axialbohrung (erstes Ringteil 4)
- 7: zweite Axialbohrung (zweites Ringteil 5)
- 8: Justagehülse
- 9: Gleitbelag
- 10: Gewindebohrung (Außenring 2)
- 11: Flansch
- 12: Aufnahmebohrung (Außenring 2)
- 13: Gleitbuchse
- 14: Triebstockbolzen
- 15: Federring
- 16: Unterlegscheibe
- 17: äußere Mantelfläche des Triebstockbolzens 14
- 18: Hülse
- 19: äußere Mantelfläche der Hülse 18

## Patentansprüche

1. Lager für eine Windenergieanlage, mit einem ersten Lagerring (2) und einem zweiten Lagerring (3), die gegeneinander verdrehbar sind, **dadurch gekennzeichnet, dass** am ersten Lagerring (2) über seinen Umfang verteilt mehrere Triebstockelemente (14) befestigt sind, die über Funktionsflächen (17, 19) für einen formschlüssigen Eingriff eines Maschinenelements verfügen, und die Triebstockelemente (14) jeweils wenigstens im Bereich ihrer Funktionsflächen (17, 19) relativ zum ersten Lagerring (2) drehbar sind.

2. Lager nach Anspruch 1, **dadurch gekennzeichnet, dass** die Triebstockelemente (14) im Bereich wenigstens eines ihrer axialen Enden am ersten Lagerring (2) befestigt sind.

3. Lager nach einem der vorhergehenden Ansprüche, **dadurch gekennzeichnet, dass** der erste Lagerring (2) zur Aufnahme der Triebstockelemente (14) wenigstens bereichsweise einen U-förmigen Querschnitt aufweist.

4. Lager nach Anspruch 1, **dadurch gekennzeichnet, dass** die Triebstockelemente (14) im Bereich ihrer axialen Mitte am ersten Lagerring (2) befestigt sind.

5. Lager nach einem der vorhergehenden Ansprüche, **dadurch gekennzeichnet, dass** die Triebstockelemente (14) am ersten Lagerring (2) drehbar aufgehängt sind.

6. Lager nach einem der vorhergehenden Ansprüche, **dadurch gekennzeichnet, dass** pro Triebstockelement (14) wenigstens ein Sicherungselement (15) zur formschlüssigen axialen Fixierung des Triebstockelements (14) vorgesehen ist.

7. Lager nach einem der Ansprüche 5 oder 6, **dadurch gekennzeichnet, dass** die Triebstockelemente (14) mittels jeweils wenigstens einer Gleitbuchse (13) relativ zum ersten Lagerring (2) drehbar gelagert sind.

8. Lager nach einem der Ansprüche 1 bis 4, **dadurch gekennzeichnet, dass** die Triebstockelemente (14) am ersten Lagerring (2) verdrehgesichert befestigt sind und jeweils wenigstens eine drehbare Komponente (18) aufweisen, an der die Funktionsfläche (19) für den formschlüssigen Eingriff des Maschinenelements ausgebildet ist.

9. Lager nach Anspruch 8, **dadurch gekennzeichnet, dass** die drehbaren Komponenten (18) als Hülsen ausgebildet sind.

10. Lager nach einem der vorhergehenden Ansprüche, **dadurch gekennzeichnet**, die Triebstockelemente (14) als Bolzen ausgebildet sind.
